Europäisches Patentamt

European Patent Office

Office européen des brevets

(19)

(11) EP 0 864 081 B1

(12) EUROPEAN PATENT SPECIFICATION

(45) Date of publication and mention
of the grant of the patent:
24.01.2001 Bulletin 2001/04

(21) Application number: 95938555.0

(22) Date of filing: 06.12.1995

(51) Int Cl.⁷: G01M 11/00

(86) International application number:
PCT/GB95/02844

(87) International publication number:
WO 97/20196 (05.06.1997 Gazette 1997/24)

(54) **DEVICE FOR INTERROGATING AN OPTICAL FIBRE NETWORK**

GERÄT ZUR ABFRAGE EINES FASEROPTISCHEN NETZWERKES

DISPOSITIF D'INTERROGATION D'UN RESEAU A FIBRES OPTIQUES

(84) Designated Contracting States:
DE ES FR GB IT

(30) Priority: 30.11.1995 GB 9524485

(43) Date of publication of application:
16.09.1998 Bulletin 1998/38

(60) Divisional application: 00115396.4 / 1 046 896

(73) Proprietor: Corning Communications Limited
Whiston, Merseyside L35 1RZ (GB)

(72) Inventors:
• WALLACE, Colin
Renfrew PA4 0XW (GB)
• UTTAMCHANDANI, Deepak
Glasgow GA3 2AP (GB)
• ANDONOVIC, Ivan
Glasgow G61 3AT (GB)

(74) Representative: Poole, Michael John et al
Corning Communications Limited
Patents and Licensing Department
Quantum House
Maylands Avenue
Hemel Hempstead, Herts. HP2 4SJ (GB)

(56) References cited:
• JOURNAL OF LIGHTWAVE TECHNOLOGY, vol. 7, no. 8, August 1989, NY; US, pages 1217-1224, XP000053677 M. TATEDA ET AL.: "Advances in Optical Time-Domain Reflectometry"
• JOURNAL OF LIGHTWAVE TECHNOLOGY, vol. 7, no. 1, January 1989, NY; US, pages 24-38, XP000039754 M. NAZARATHY ET AL.: "Real-Time Long Range Complementary Correlation Optical Time Domain Reflectometer "
• IEE Colloquium on Guided Wave Optical Signal Processing, 8th June 1995, London; digest no. 1995/128; C.G. Wallace et al.: "Electro-Optical Correlation Utilising a Semiconductor Laser Amplifier"

**Description**

This invention relates to devices for interrogating optical fibre networks, for example networks that incorporate one or more sensors, or line networks that are employed for communications purposes. One particularly important area in which the invention may be employed is in the interrogation of systems such as passive optical networks by reflectometry methods in order to locate faults in the system.

Optical networks may be monitored for fault detection and location by optical time domain reflectometry (OTDR) in which a pulse of light is injected into one end of the system and the reflection of the pulse is observed as a function of time. One problem associated with such reflectometry methods is the lack of dynamic range of the system when relatively high resolution of the fault is required: in order to achieve high resolution, a very narrow light pulse is required, for example of $10^{-7}$s duration, but narrowness of the light pulse restricts the optical energy of the pulse, with the result that the reflected signal can have very poor signal to noise ratio. This is especially true of branched passive optical networks where the intensity of the transmitted pulse is reduced at each branching point in the network and so necessitates interrogation systems that have a high dynamic range. In order to overcome this problem it has been proposed to replace the pulse by a signal comprising a sequence of pulses forming a code e.g. a pseudo random binary sequence (PRBS) and to perform a correlation of the reflected signal with a time delayed version of the original signal, so called "correlation OTDR". Since the reflected signal will comprise a number of reflections of the original signal from the reflectors in the system, the correlation will thus comprise a number of autocorrelation functions of the original signal, each one corresponding to one of the Fresnel reflections in optical system. By adjusting the time delay of the reference signal derived from the original signal, the peaks of the correlation function corresponding to the Fresnel reflections of interest can be monitored through the formation of the correlation function of the reflected signal and a suitably delayed reference signal. This system has the advantage that while the resolution is determined by the width of the individual pulses, the dynamic range is determined by the total energy of the pulse sequence, with the result that the dynamic range of the system can, in principle, be increased many fold without sacrificing resolution. M. Tateda et al. (Journal of Lightwave Technology, vol. 7, no. 8, August 1989, New, York; "Advances in Optical Time-Domaine Reflectometry") describe an optical time-domain reflectometer in which a pseudorandom bit sequence is used as an interrogation signal. The backscattered signal is evaluated by forming the correlation between the backscattered signal and the time delayed interrogation signal. Such a system has also been proposed by Nazarathy et al (J. Lightwave Technol. vol 7 1 (1989) which describes the use of biased bipolar Golay code pairs for observing an optical network. Golay codes were originally developed for the electrical domain and are bipolar codes that exist in pairs and have the property that when the codes are autocorrelated and the autocorrelations of the pair of codes are summed, a "perfect" autocorrelation is formed, i.e. one that has no non-zero side lobes. Bipolar Golay codes of $2n$ elements in length may be generated by the formula:

$$n \text{ elements} \qquad\qquad 2n \text{ elements}$$

$$\begin{pmatrix} A \\ B \end{pmatrix} \longrightarrow \begin{pmatrix} AB \\ A\bar{B} \end{pmatrix}$$

where the $2n$ element codes are formed by concatenating the $n$ element codes $A$ and $B$, and $A$ and $\bar{B}$, the code $\bar{B}$ representing the inverse of code B.
Starting with the one element Golay pair the Golay codes of length 2, 4, 8 are readily derived:

$$\begin{Bmatrix} 1 \\ 1 \end{Bmatrix} \rightarrow \begin{Bmatrix} 1, & 1 \\ 1, & -1 \end{Bmatrix} \rightarrow \begin{Bmatrix} 1, & 1 & 1, & -1 \\ 1, & 1 & -1, & 1 \end{Bmatrix}$$

$$\rightarrow \begin{Bmatrix} 1, & 1, & 1 & -1, & 1, & 1, & -1, & 1 \\ 1, & 1, & 1 & -1, & -1, & -1, & 1, & -1 \end{Bmatrix}$$

This procedure may be continued on to generate sequences of lengths which are powers of two. For any such codes, the function:

$$A^*A + B^*B$$

will have no non-zero values other than the zero phase difference peak.

However, bipolar codes are inappropriate for use in optical reflectometry methods which require unipolar codes, and some means must therefore be used to convert the bipolar code into unipolar form. The method employed by Nazarathy et al (supra), however, has the disadvantage that the bias that has been applied to the bipolar code to render it unipolar must be subtracted during processing of the reflected signals, which requires processing of the signals in the electronic domain. This necessitates detection of the optical signals with a very high bandwith photodetector if high resolution is to be achieved, but the sensititivity of photodetectors is highly dependent on the bandwidth of the signals (e.g. at bit rates of the order of 5 Gbit s$^{-1}$) with the result that the dynamic range of the system is still limited , in practice, unless resolution is sacrificed.

The present invention is based on a novel way of generating unipolar codes for use in optical reflectometry methods, and especially for generating unipolar Golay codes that have "perfect" or almost "perfect" autocorrelation functions. According to one aspect of the present invention, there is provided apparatus for interrogating an optical fibre network, which comprises:

( i) a device for sending an interrogation signal into the network, the interrogation signal comprising a sequence of optical pulses forming a code; and

(ii) a detection system which correlates a signal received from the network in response to the interrogation signal with a reference signal that is generated by the device and corresponds to a time delayed version of the interrogation signal,

wherein

(a) the device for sending the interrogation signal into the optical network generates the signal in the form of a sequence of optical pulses forming a unipolar Golay code pair (*A* and *B*) which has been formed by replacing each bit of a bipolar Golay code pair with a two bit unipolar sequence 10 or 01 depending on the polarity of the bipolar code bit;

(b) the detection system generates values of the autocorrelation functions of the Golay pairs (*A*\**A*) and (*B*\**B*) and also correlation functions of each of the Golay components with their ones complement ($A^*\bar{A}$) and ($B^*\bar{B}$); and

(c) the apparatus includes means for generating values of the correlation function

$$[(A^*A) - (A^*\bar{A})] + [(B^*B) - (B^*\bar{B})]$$

for a predetermined time delay of the reference signal.

Although such apparatus has already been proposed by C. G. Wallace et al (IEE Colloquium on Guided Wave Optical Signal Processing; 8th June 1995, London; digest no. 1995/128: Electro-Optical Correleation Utilising a Semiconductor Laser Amplifier for Spread Spectrum Systems), this disclosure constitutes non-prejudicial prior art according to Article 55(1)(a)EPC.

The bipolar code that is used to form the unipolar code thus comprises code sequences forming a Golay code pair and is converted to a unipolar Golay code pair. For example positive elements can be coded as 10 while negative elements can be coded as 01. Thus Golay pair A = 1,1,1,-1 and B=1,1,-1,1 would become A=10101001 and B=10100110. Of course, positive elements could be coded as 01 and negative elements as 10 if desired.

Such unipolar Golay codes have the advantage that it is possible to form a correlation function of the formula (1).

$$[(A^*A) - (A^*\bar{A})] + [(B^*B) - (B^*\bar{B})] \qquad (1)$$

wherein

A and B are sequences forming the Golay code pair that is used as the interrogation signal, and
$\bar{A}$ and $\bar{B}$ are ones complements of $A$ and $B$ respectively,

The autocorrelation function (1) has an almost perfect form in that it is zero apart from the zero phase difference peak and the two bits lying adjacent thereto. It is therefore possible by employing such a function to resolve reflectors in an optical network provided that their distances to the head end where the apparatus is located differ by a sufficient amount to cause their reflections to be separated by at least two bits of the modified Golay code sequence, and the fact that the autocorrelation function is zero at such phase differences, means cross-talk will be greatly reduced.

The use of the unipolar code employed according to the invention has the advantage that the signal processing can be conducted in the optical domain in real time. Thus, for example, the detection system may comprise

a) an AND gate into which are fed the signal received from the optical line system and the reference signal; and

b) an integrator circuit that integrates the output of the AND gate (after conversion to an electrical signal if necessary) to generate a value for the correlation of the signal received from the optical network and the reference signal for a predetermined time delay of the reference signal.

Any form of AND gate may in principle be employed in the detection system. The AND gate may have an optical output (in which case conversion to an electrical signal will be necessary) or an electrical output, and may have two optical or electrical inputs or may have one optical and one electrical input. However, the gate is preferably formed from a semiconductor laser amplifier (SLA). When supplied with a drive current the SLA passes the incoming optical signal with amplification, while if the drive current is absent the signal is absorbed. Thus, the code sequence that is used to generate the reference signal may be passed, after the appropriate time delay, to the drive current input of the SLA, and the optical input of the SLA is connected to the optical line system. The output of the SLA is fed into a light detector circuit which can act as or be input directly into the integrator circuit, for example it can be fed into a power meter. The use of an SLA as the AND gate has the advantage that not only is it capable of switching at a speed appropriate to the bit rate required, it generates a high degree of gain (e.g. 12 dB fibre-to-fibre gain) with the result that the relative insensitivity of the photodetector at such bit rates is reduced. Furthermore, unlike the use of integrated optical modulators as described by Al-Raweshidy et al (Optics Communication Vol 81. (1991) pp. 171-174) which will not switch properly unless the polarisation of the reflected signal is correct, SLAs are polarisation insensitive and so will operate whatever the polarisation of the reflected signal.

The integrator circuit can be any conventional integrator circuit having a time constant greater than the time period during which one code sequence of the signal is received from the optical line system and will normally be provided by employing a low bandwidth photodetector. The output of the integrator circuit will thus be a dc signal whose level corresponds to the value of the correlation function of the time delayed reference signal and the reflected signal at any one given time delay. Such a detection system provides a very simple means of forming the correlation function values at high speed since no, or very little, digital computation is required. Any d.c. component of the SLA and any noise generated in the system will be substantially reduced by the nature of the autocorrelation function 1 above.

The pulse rate of the code sequence should be sufficiently high to provide adequate resolution, for example in the range of $10^7$ to $10^{10}$ bits s$^{-1}$, and the number of individual pulses in the code sequence should be sufficient to enable each reflector in the system to be uniquely identified. Thus the code sequence should be sufficiently long that the start of the sequence reflected from the most distant point in the optical line system is received by the detection system when or before the end of the code sequence is transmitted.

In respect of each Golay code, e.g. code A, the autocorrelation (A*A) and the correlation with its complement (A*$\bar{A}$) may be conducted sequentially or simultaneously, but preferably simultaneously (in which case separate detection systems are required for A*A and A*$\bar{A}$), the complement $\bar{A}$ being generated by passing the time delayed reference signal through an inverter that will replace 1 bits by zero and vice versa or alternatively being generated as a separate code. An integrator circuit is employed to obtain values for each of the two correlations and one is then subtracted from the other. The procedure is then repeated for the Golay complement B and the resultant values are then summed to generate the values for the resultant autocorrelation function (1). The number of computational steps required for generating the individual values of the autocorrelation function (1) is thus kept to a minimum, thereby enabling the values to be obtained in real time at very high signal bit rates (and thus high resolution).

A further advantage of the signal coding is the high duty cycle (50%) which ensures a high signal-to-noise ratio of the reflected signal.

Although the value of the autocorrelation function for any given phase difference can be generated very quickly and simply, it will usually be a time consuming process to generate the entire autocorrelation function of the reflected signal in order to map the whole network, since the interrogation signal will typically contain in the order of $10^5$ to $10^6$ individual bits or more (depending, obviously, on the size of the network). Fortunately, however, this will be necessary only rarely for housekeeping purposes after any system has been commissioned, and normally all that will be required is to observe the intensity of the reflected signal from each of the reflectors in the network that is being monitored, e. g. for each of the end users and, if desired, from any additional reflectors located at branching points of the system. Once the reflection pattern of the line system is known, the time delays required to observe the reflectors can be stored in memory, and the individual reflectors can therefore be polled without the necessity to observe the remaining parts of the system. If a system fault occurs in part of the line system that is not being monitored, for example high signal attenuation occurring in a region between a pair of Fresnel reflectors, this will manifest itself by a change in the relative intensities of the peaks from the reflectors on either side of the fault, in which case the correlation function for that part of the system between the reflectors can be generated in order to locate the fault. Since this procedure involves observing only a small part of the line system, it will take only a fraction of the time needed to observe the line system as a whole.

The output of the sensing apparatus detector will be a dc electrical or optical signal proportional to the value of the correlation function of the reference signal and the reflection for a given phase difference. However, if an SLA is used as the AND gate it also will have a large d.c. component due to amplified spontaneous emission, and it may, in some instances, be desirable to move the desired output from the SLA away from the d.c. level. This can be achieved by superimposing a low frequency sine wave on to the high frequency code at the laser input. The output of the correlation can then be measured using an a.c. coupled detector with a lock-in amplifier. However, the use of the autocorrelation function (1) has the advantage, as mentioned above, that all d.c. components that are due to the SLA cancel one another out, with the result that much simpler d.c. circuitry can be used.

According to yet a further aspect, the invention provides a method of interrogating an optical fibre network, which comprises:

(i) sending an interrogation signal into the optical network, the interrogation signal comprising a sequence of optical pulses forming a unipolar Golay code pair ($A$ and $B$) which has been formed by replacing each bit of a bipolar Golay code pair with a two bit unipolar sequence 10 or 01 depending on the polarity of the bipolar code bit;

(ii) detecting the signal received from the line system in response to the interrogation signal and correlating the signal received from the line system with a reference signal that corresponds to a time delayed version of the interrogation signal to generate values of the autocorrelation functions of the Golay pairs ($A*A$) and ($B*B$) and also correlation functions of each of the Golay components with their ones complements ($A*\bar{A}$) and ($B*\bar{B}$); and

(iii) generating values of the correlation function

$$[(A*A) - (A*\bar{A})] + [(B*B) - (B*\bar{B})]$$

for a predetermined time delay of the interrogation signal.

The high duty cycle and low cross-talk that are possible using the unipolar codes according to the invention enable an improved dynamic range/resolution compromise to be achieved with relatively low signal to noise ratio. A two-way dynamic range of 36$dB$ has been obtained without optimisation, which could therefore be employed with a passive optical network (PON) having 64 end users. With optimisation it is envisaged that the invention could be employed for testing PONs having 500 or more end users.

The apparatus and method according to the invention are not limited to use in reflectometry methods for monitoring line optical fibre networks, but can instead be employed with systems that employ throughput sensors for example ladder sensor networks.

The present invention will now be described by way of example, with reference to the accompanying drawings, in which:

Figure 1     is a functional schematic showing the formation of the autocorrelation function of a pair of bipolar Golay codes;

Figure 2     is a schematic showing the formation of the autocorrelation function of a pair of modified, unipolar Golay codes;

Figure 3     is a schematic showing the set up of apparatus according to the invention for interrogating an optical line system; and

Figure 4     is a schematic showing an alternative sensor set up.

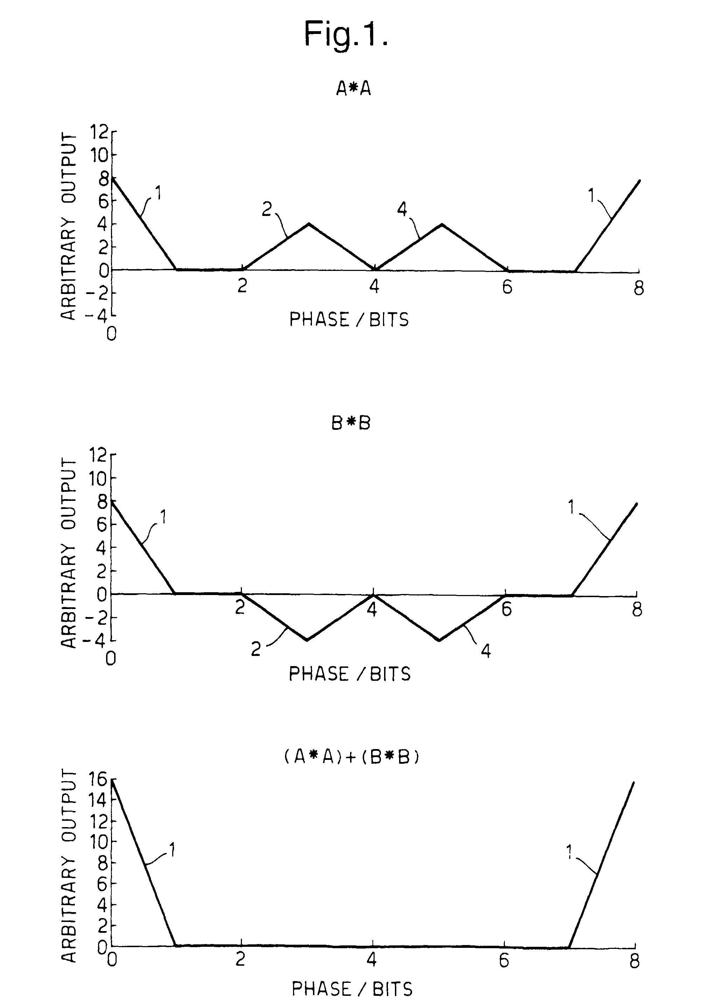

Referring to the accompanying drawings, Figure 1 shows the autocorrelation function of a bipolar Golay code A and its Golay complement B. Each code is an 8 bit code, code A having the form 1 1 1 - 1 1 1 - 1 1 and its complement B having the form 1 1 1 - 1 -1 -1 1 -1. When codes are individually autocorrelated, each autocorrelation has a zero phase peak 1 and in addition a number of lobes 2 and 4. The lobes in the two autocorrelations $A^*A$ and $B^*B$ are of opposite polarity so that when they are added to produce $(A^*A) + (B^*B)$, a "perfect" autocorrelation is formed which is zero everywhere apart from the zero phase peak 1.

Although such codes can be used for electrical signals, they are not appropriate for optical signals which can only be unipolar. Thus, according to the invention, the bipolar codes are modified or pre-coded into unipolar form for example by replacing each element 1 with the bit pair 10, and each element -1 with the bit pair 01 so that, for example, the bipolar code A would become a 16 bit code 1 0 1 0 1 0 0 1 1 0 1 0 0 1 1 0. In addition to the modified Golay pair A and B, their ones complements $\bar{A}$ and $\bar{B}$ are formed by replacing each zero in the modified code by 1 and vice versa. The four components so formed may be autocorrelated by means of the autocorrelation formula (1)

$$[(A^*A) - (A^*\bar{A})] + [(B^*B) - (B^*\bar{B})] \tag{1}$$

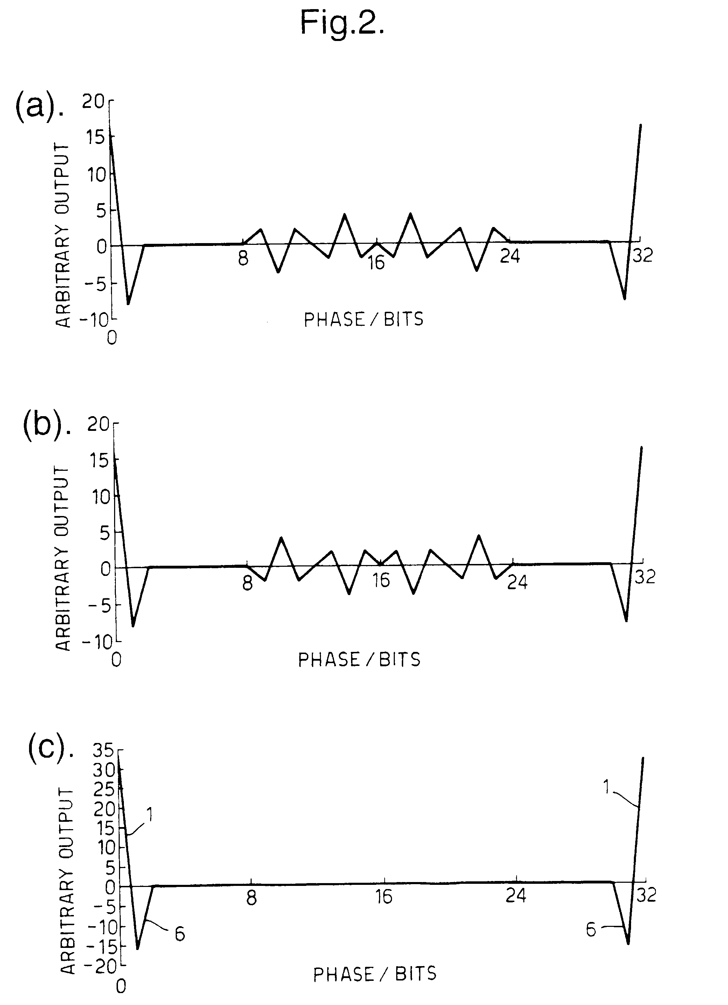

to form an almost perfect autocorrelation shown in figure 2. This figure shows in (a) the autocorrelation $(A^*A)- (A^*\bar{A})$ of one of the Golay codes for a 32 bit modified code, and in (b) the autocorrelation $(B^*B) - (B^*\bar{B})$ of the Golay complement of A. When the two autocorrelation functions are summed to give the resultant autocorrelation shown in (c) all the non-zero lobes cancel out with the exception of one lobe 6 adjacent to, and on each side of, the zero phase difference peak 1.

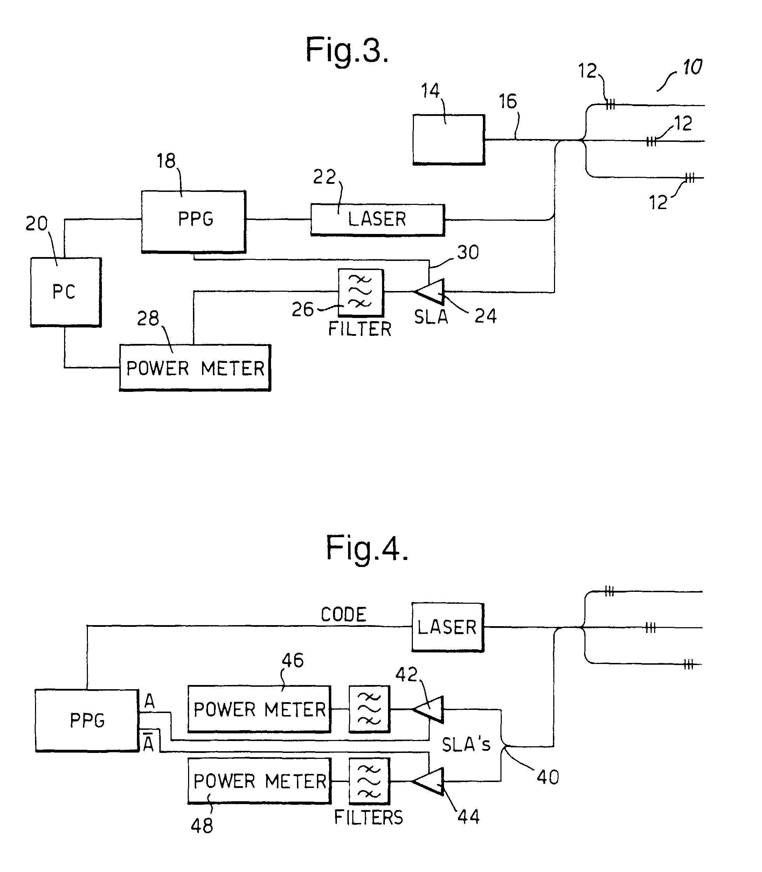

One form of apparatus that employs this form of modified Golay coding is shown in figure 3. The apparatus is used to interrogate a passive optical network 10 shown schematically merely as a number of reflectors 12 representing end users etc an exchange or head-end 14 and an optical line 16 connecting them. In the region of the exchange, apparatus for interrogating the network is located, which comprises a pulse pattern generator (PPG) 18 controlled by a microcomputer 20, which generates alternating unipolar Golay code pairs and sends them to laser 22. The laser 22 then launches the modified Golay codes into the optical line 16 at the appropriate wavelength. The signal that is reflected by the passive optical network is received by a semiconductor laser amplifier 24 whose output is sent to a power meter 28 via a band pass filter 26 whose purpose is to reduce noise generated by the SLA. The PPG 18 also generates a time delayed version of the coded interrogation signal which is fed via line 30 to the electrical drive current input of the amplifier 24 with the result that the amplifier acts as an AND gate whose output is an amplified version of the reflected signal ANDed with the time shifted initial signal. The output signal is optically filtered by filter 26, converted to an electrical signal by a conventional photodetector circuit (not shown) and the signal is then fed into power meter 28. The power meter 28 comprises an integrator circuit which may in the simplest form simply be formed from a low pass RC circuit, but which has a time constant greater than the time taken for one complete modified Golay component to be transmitted. The output value of the signal from the power meter will constitute a summation of the bits of the reflected signal ANDed with the time delayed version of the signal and will thus form a value of the correlation function of the interrogation signal and its reflection for one value of the phase difference. This value is then stored in the microcomputer 20.

If the preferred autocorrelation function (1) is to be generated, it is necessary to generate the complements $\bar{A}$ and $\bar{B}$ of each of the Golay complements and to correlate these with the reflected signal. This may be achieved simultaneously as shown in figure 4 in which the reflected signal is split by a 3dB coupler 40 into a pair of parallel semiconductor laser amplifiers 42 and 44, one of which is driven by reference signal A and the other by it's complement $\bar{A}$ when code A is the input light signal. The resulting signals are filtered and converted to electrical signals by photodetector circuits or power meters 46 and 48 and then recorded on a PC for signal processing.

**Claims**

**1.**  Apparatus for interrogating an optical fibre network (10), which comprises:

( i) a device (18, 20, 22) for sending an interrogation signal into the network, the interrogation signal comprising a sequence of optical pulses forming a code; and

(ii) a detection system (24, 26, 28) which correlates a signal received from the network in response to the interrogation signal with a reference signal that is generated by the device (18) and corresponds to a time delayed version of the interrogation signal,

wherein

(a) the device (18, 20, 22) for sending the interrogation signal into the optical network generates the signal in the form of a sequence of optical pulses forming a unipolar Golay code pair (*A* and *B)* which has been formed by replacing each bit of a bipolar Golay code pair with a two bit unipolar sequence 10 or 01 depending on the polarity of the bipolar code bit;

(b) the detection system (24, 26, 28) generates values of the autocorrelation functions of the Golay pairs (*A*A*) and (*B*B*) and also correlation functions of each of the Golay components with their ones complement (*A*$\bar{A}$*) and (*B*$\bar{B}$*); and

(c) the apparatus includes means for generating values of the correlation function

$$[(A*A) - (A*\bar{A})] + [(B*B) - (B*\bar{B})]$$

for a predetermined time delay of the reference signal.

**2.** Apparatus as claimed in claim 1, wherein the detection system comprises:

a) an AND gate (24) into which are fed the signal received from the optical line system and the reference signal; and

b) an integrator circuit (28) that integrates the output of the AND gate (after conversion to an electrical signal if necessary) to generate a value for the correlation of the signal received from the optical network and the reference signal for a predetermined time delay of the reference signal.

**3.** Apparatus as claimed in claim 2, wherein the integrator circuit (28) comprises a low-pass RC filter that has a time constant greater than the time taken to send one complete interrogation signal.

**4.** Apparatus as claimed in claim 2 or claim 3, wherein the AND gate comprises a semi-conductor laser amplifier (24) which amplifies the signal received from the network (10), and which is powered by the reference signal.

**5.** Apparatus as claimed in any one of claims 2 to 4, wherein the AND gate (42) is arranged in parallel with an additional AND gate (44) into which is fed the signal received from the network system (10), and a complement of the reference signal.

**6.** A method of interrogating an optical fibre network (10), which comprises

(i) sending an interrogation signal into the optical network, the interrogation signal comprising a sequence of optical pulses forming a unipolar Golay code pair (A and B) which has been formed by replacing each bit of a bipolar Golay code pair with a two bit unipolar sequence 10 or 01 depending on the polarity of the bipolar code bit;

(ii) detecting the signal received from the line system in response to the interrogation signal and correlating the signal received from the line system with a reference signal that corresponds to a time delayed version of the interrogation signal to generate values of the autocorrelation functions of the Golay pairs (*A*A*) *and* (*B*B*) and also correlation functions of each of the Golay components with their ones complements

$$(A*\bar{A}) \text{ and } (B*\bar{B});$$

and

(iii) generating values of the correlation function

**EP 0 864 081 B1**

$$[(A^*A) - (A^*\bar{A})] + [(B^*B) - (B^*\bar{B})]$$

for a predetermined time delay of the interrogation signal.

7. A method as claimed in claim 6, in which the optical line system includes a plurality of reflectors (12) and the time delay is varied in order to poll the reflectors of the system.

8. A method as claimed in claim 6 or claim 7, wherein the optical network (10) is a passive optical network for telecommunications and includes at least 500 end users.

**Patentansprüche**

1. Vorrichtung zum Abfragen eines Lichtwellenleiternetzwerks (10) mit:

(i) einer Vorrichtung (18, 20, 22) zum Übertragen eines Abfragesignals in das Netzwerk, wobei das Abfragesignal eine einen Code bildende Folge optischer Impulse aufweist; und
(ii) einem Erfassungssystem (24, 26, 28), das ein in Antwort auf das Abfragesignal vom Netzwerk empfangenes Signal mit einem Referenzsignal korreliert, das durch die Vorrichtung (18) erzeugt wird und einer zeitverzögerten Version des Abfragesignals entspricht;

wobei

(a) die Vorrichtung (18, 20, 22) zum Übertragen des Abfragesignals in das optische Netzwerk das Signal in Form einer Folge optischer Impulse erzeugt, die ein unipolares Golay-Codepaar ($A$ und $B$) bilden, das durch Ersetzen jedes Bits eines bipolaren Golay-Codepaars in Abhängigkeit von der Polarität des bipolaren Codebits durch eine unipolare 2-Bit-Folge 10 oder 01 gebildet worden ist;
(b) das Erfassungssystem (24, 26, 28) Werte der Autokorrelationsfunktionen der Golay-Paare ($A^*A$) und ($B^*B$) und auch Korrelationsfunktionen jeder der Golay-Komponenten mit ihren Einerkomplementen ($A^*\bar{A}$) und ($B^*\bar{B}$) erzeugt; und
(c) wobei die Vorrichtung eine Einrichtung zum Erzeugen von Werten der Korrelationsfunktion

$$[(A^*A)-(A^*\bar{A})]+[(B^*B)-(B^*\bar{B})]$$

für eine vorgegebene Zeitverzögerung des Referenzsignals aufweist.

2. Vorrichtung nach Anspruch 1, wobei das Erfassungssystem aufweist:

a) ein UND-Gatter (24), dem das vom optischen Leitungssystem zugeführte Signal und das Referenzsignal zugeführt werden; und
b) eine Integratorschaltung (28), die das Ausgangssignal des UND-Gatters (gegebenenfalls nach einer Umwandlung in ein elektrisches Signal) integriert, um einen Wert für die Korrelation des vom optischen Netzwerk empfangenen Signals und des Referenzsignals für eine vorgegebene Zeitverzögerung des Referenzsignals zu erzeugen.

3. Vorrichtung nach Anspruch 2, wobei die Integratorschaltung (28) ein RC-Tiefpaßfilter mit einer Zeitkonstante aufweist, die größer ist als die Zeitdauer zum Übertragen eines vollständigen Abfragesignals.

4. Vorrichtung nach Anspruch 2 oder 3, wobei das UND-Gatter einen Halbleiterlaserverstärker (24) aufweist, der das vom Netzwerk (10) empfangene Signal verstärkt und durch das Referenzsignal mit Leistung versorgt wird.

5. Vorrichtung nach einem der Ansprüche 2 bis 4, wobei das UND-Gatter (42) parallel zu einem weiteren UND-Gatter (44) angeordnet ist, dem das vom Netzwerksystem (10) empfangene Signal und ein Komplement des Referenzsignals zugeführt wird.

6. Verfahren zum Abfragen eines Lichtwellenleiternetzwerks (10) mit den Schritten:

8

(i) Übertragen eines Abfragesignals in das optische Netzwerk, wobei das Abfragesignal eine Folge optischer Impulse aufweist, die ein unipolares Golay-Codepaar (*A* und *B*) bilden, das durch Ersetzen jedes Bits eines bipolaren Golay-Codepaars in Abhängigkeit von der Polarität des bipolaren Codebits durch eine unipolare 2-Bit-Folge 10 oder 01 gebildet worden ist;

(ii) Erfassen des in Antwort auf das Abfragesignal vom Leitungssystem empfangenen Signals und Korrelieren des vom Leitungssystem empfangenen Signals mit einem Referenzsignal, das einer zeitverzögerten Version des Abfragesignals entspricht, um Werte der Autokorrelationsfunktionen der Golay-Paare ($A^*A$) und ($B^*B$) und auch Korrelationsfunktionen jeder der Golay-Komponenten mit ihren Einerkomplementen ($A^*\bar{A}$) und ($B^*\bar{B}$) zu erzeugen; und

(iii) Erzeugen von Werten der Korrelationsfunktion

$$[(A^*A)-(A^*\bar{A})]+[(B^*B)-(B^*\bar{B})]$$

für eine vorgegebene Zeitverzögerung des Abfragesignals.

7. Verfahren nach Anspruch 6, wobei das optische Leitungssystem mehrere Reflektoren (12) aufweist, und wobei die Zeitverzögerung variiert wird, um die Reflektoren des Systems abzufragen.

8. Verfahren nach Anspruch 6 oder 7, wobei das optische Netzwerk (10) ein passives optisches Netzwerk für Telekommunikationen ist und mindestens 500 Endbenutzer aufweist.

**Revendications**

1. Appareil pour interroger un réseau à fibres optiques (10), l'appareil comprenant :

(i) un dispositif (18, 20, 22) pour injecter un signal d'interrogation dans le réseau, le signal d'interrogation comprenant une séquence d'impulsions optiques formant un code ; et

(ii) un système de détection (24, 26, 28) qui effectue une corrélation entre un signal reçu du réseau en réponse au signal d'interrogation et un signal de référence qui est généré par le dispositif (18) et correspond à une version retardée dans le temps du signal d'interrogation,

dans lequel

(a) le dispositif (18, 20, 22) servant à injecter le signal d'interrogation dans le réseau optique génère le signal sous la forme d'une séquence d'impulsions optiques formant une paire de codes de Golay unipolaires (A et B) qui a été formée en remplaçant chaque bit d'une paire de codes de Golay bipolaires par une séquence unipolaire à deux bits égale à 10 ou 01 en fonction de la polarité du bit du code bipolaire ;

(b) le système de détection (24, 26, 28) génère des valeurs des fonctions d'autocorrélation des paires de Golay (A*A) et (B*B), ainsi que des fonctions de corrélation de chacune des composantes de Golay avec leur complément à un ($A^*\bar{A}^*$ et ($B^*\bar{B}$); et

(c) l'appareil comprend un moyen pour générer des valeurs de la fonction de corrélation

$$[(A^*A) - (A^*\bar{A})] + [(B^*B) - (B^*\bar{B})]$$

pour un retard prédéterminé du signal de référence.

2. Appareil selon la revendication 1, dans lequel le système de détection comprend :

a) une porte ET (24) dans laquelle sont introduits le signal reçu du système de ligne optique et le signal de référence ; et

b) un circuit intégrateur (28) qui intègre la sortie de la porte ET (après conversion en un signal électrique si besoin est) afin de générer une valeur pour la corrélation entre le signal reçu du réseau optique et le signal de référence pour un retard prédéterminé du signal de référence.

3. Appareil selon la revendication 2, dans lequel le circuit intégrateur (28) comprend un filtre RC (résistance-capacité) passe-bas dont la constante de temps est supérieure au temps requis pour envoyer un signal d'interrogation complet.

4. Appareil selon la revendication 2 ou la revendication 3, dans lequel la porte ET comprend un amplificateur laser à semi-conducteur (24) qui amplifie le signal reçu du réseau (10) et qui est alimenté par le signal de référence.

5. Appareil selon l'une quelconque des revendications 2 à 4, dans lequel la porte ET (42) est disposée en parallèle avec une porte ET supplémentaire (44) dans laquelle sont introduits le signal reçu du système de réseau (10) et un complément du signal de référence.

6. Procédé pour interroger un réseau à fibres optiques (10), le procédé consistant à :

(i) injecter un signal d'interrogation dans le réseau optique, le signal d'interrogation comprenant une séquence d'impulsions optiques formant une paire de codes de Golay unipolaires (A et B) qui a été formée en remplaçant chaque bit d'une paire de codes de Golay bipolaires par une séquence unipolaire de deux bits égale à 10 ou 01 en fonction de la polarité du bit du code bipolaire ;
(ii) détecter le signal reçu du système de ligne en réponse au signal d'interrogation et établir une corrélation entre le signal reçu du système de ligne et un signal de référence qui correspond à une version retardée dans le temps du signal d'interrogation afin de générer des valeurs des fonctions d'autocorrélation des paires de codes de Golay (A*A) et (B*B) et également des fonctions de corrélation de chacune des composantes de Golay avec leurs compléments à un (A*$\overline{A}$) et (B*$\overline{B}$); et
(iii) à générer des valeurs de la fonction de corrélation

$$[(A*A) - (A*\overline{A})] + [(B*B) - (B*\overline{B})]$$

pour un retard prédéterminé du signal d'interrogation.

7. Procédé selon la revendication 6, dans lequel le système de ligne optique comprend une multiplicité de réflecteurs (12) et le retard est modifié afin d'interroger les réflecteurs du système.

8. Procédé selon la revendication 6 ou la revendication 7, dans lequel le réseau optique (10) est un réseau optique passif pour télécommunications et comprend au moins 500 utilisateurs finaux.

# Fig.1.

A*A

B*B

(A*A)+(B*B)

# Fig.2.

(a).

(b).

(c).

# Fig.3.

# Fig.4.